# EUROPEAN PATENT APPLICATION

(11) **EP 2 487 895 A2**
(43) Date of publication of application: **15.08.2012**
(21) Application number: 12155429.9
(22) Date of filing: 14.02.2012
(51) Int. Cl.: H04N 5/232, H04N 5/33, H04N 5/361

(54) **Thermal imaging device with head position sensing**

(30) Priority: 14.02.2011 GB 201102523
(71) Applicant: Infrared Security Solutions Limited, Stanmore, Middlesex HA7 4AR (GB)
(72) Inventor: Matthews, John Hawkins, Stanmore, Middlesex HA7 4AR (GB); Shepperd, Steven John, Stanmore, Middlesex HA7 4AR (GB)
(74) Representative: Cordina, Kevin John

(57) **Abstract**

Thermal imaging devices with head position sensors are described, together with methods of operation. The head position sensor may be utilised to control calibration of the device and control other functions.

## Description

### BACKGROUND

Apparatus and methods utilising head position sensing in relation to the operation of thermal imaging devices are disclosed.

Thermal imaging devices detect infrared radiation and output a visible display representing the distribution of that radiation, thereby enabling viewing of the infrared image by the human eye. Such devices have been widely utilised to enable people to continue operating in darkness based on the thermal image. For example, thermal imagers are widely used by the military. A particular application is gun sights to enable a gun to be accurately aimed even in total darkness.

Typical thermal imagers utilise microbolometer infrared detectors. Such detectors suffer from offset drift, and require intermittent calibration (Non-Uniformity Correction (NUC)) to maintain operation. Such calibration requires the detector to be de-activated while the process is performed resulting in a period of time during which the device cannot be utilised. NUC may take as little as 0.4 seconds, but even such a short period of unavailability can be extremely disadvantageous in many applications.

The NUC process is typically performed at preset periodic intervals, or when a calculation based on temperature indicates a sufficient drift may have occurred to require recalibration. Such approaches may lead to the NUC being performed at an inconvenient time. Manual initiation of the NUC process may also be utilised to avoid inconvenient loss of the device, but a user may still be forced to perform an NUC at an inconvenient time if the image quality deteriorates during use.

Infrared detectors that do not require NUC are available, but the devices are significantly more expensive than conventional devices.

There is therefore a requirement for a system to overcome one or all of the foregoing disadvantages in connection with calibration of thermal imaging devices.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.
There is provided a thermal imaging device, comprising a detector for detecting thermal radiation, a display for outputting a visible image, a processing system coupled to the detector and to the display, the processing system configured to process the output of the detector and output signals to the display to cause the display of a visible image representative of the thermal image detected by the detector, a sensor configured for detecting the proximity of a user's head to the device, wherein the processing system is configured to perform a Non-Uniformity Correction dependent on the signal from the sensor.
The processing system may perform a Non-Uniformity Correction only when the sensor indicates no head in proximity to the device.
The processing system may perform a Non-Uniformity Correction when the sensor indicates the approach of a head to the device.
The processing system may perform a Non-Uniformity Correction when the sensor indicates the retreat of a head from the device.
The sensor may comprise a light source configured to emit light towards the expected position of a user's head when looking at the display, and a detector configured to detect light from the light source that has been reflected by a user's head when in proximity to the device.
The emitted light may be directed towards the expected position of a user's eye and the detector is configured to detect light reflected from that user's eye.
The sensor may be a temperature sensor.
The sensor may be a pyroelectric sensor.
The processing system may be configured to deactivate the device when the sensor indicates a head is not in proximity to the device.
The processing system may be configured to adjust a zoom of the device dependent on the proximity of head as detected by the sensor.
The sensor may provide an indication of distance between the device and the user's head.
The NUC may be performed when the distance is a predetermined distance.
The NUC may be performed when the distance is greater than a predetermined distance.
The zoom may be adjusted dependent on the distance.
The proximity may be detected in a direction along the viewing direction of the display.
There is also provided a method of calibrating a thermal imaging device, comprising the steps of detecting proximity of a user's head to the output display of the device, and performing a Non-Uniformity Correction dependent on that proximity.
The Non-Uniformity Correction may be performed only when the sensor indicates no head in proximity to the device.
The Non-Uniformity Correction may be performed when the sensor indicates the approach of a head to the device.
The Non-Uniformity Correction may be performed when the sensor indicates the retreat of a head from the device.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawing, wherein:

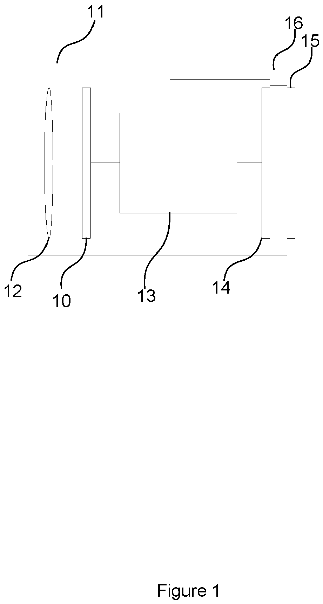

Figure 1 shows a schematic diagram of a thermal imaging device.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Figure 1 shows a schematic diagram of a thermal imaging device according to the current disclosure. A detector 10 is positioned within a casing 11 and behind a suitable optical system 12 to focus radiation onto the detector. Optical system 12 may be a simple lens, or may provide zoom functionality. A processing system 13 is connected to the detector 10 and to an output display 14. Processing system 13 processes the output of the detector 10 and outputs signals to the output display 14 which outputs a representation of the infrared image received by the detector for viewing through eyepiece 15.

Detector 10 is of the type that requires periodic Non-Uniformity Correction (NUC), which is controlled by the processing system 13. As noted above, performance of this calibration may be inconvenient if performed while the device is being utilised. To address this limitation, a sensor 16 is provided to detect the proximity of a person's eye to the eyepiece. The processing system 13 is configured to perform the NUC based on the signal from sensor 16.

In a particular embodiment, the NUC is only performed when the sensor 16 indicates a person is not looking into the device (i.e. the sensor does not indicate proximity of an eye). The timing of the NUC may be controlled as noted previously based on the time and temperature since the last calibration, with the exception that it is not performed if an eye is detected by sensor 16.

In an alternative embodiment the NUC may be performed when the sensor 16 indicates that a person's eye has moved away from the device. This may indicate that the user will not use the device for a period of time and therefore NUC can be performed without affecting use of the device. Further NUCs may then be performed at short intervals until the sensor 16 indicates the return of an eye to the eyepiece 15 to ensure the detector remains calibrated for when use resumes. However, repeated NUC would increase power consumption and a trade-off may therefore be required between rapid NUC to give maximum availability, and slower NUC with less power consumption.

In a further embodiment, a NUC may be performed as the sensor 16 detects the approach of an eye to the eye-piece. If the NUC is performed sufficiently quickly the delay in activation will not be noticed by the user, or will only have a minimal impact on the start-up time. This method may be particularly appropriate if the sensor can detect the approach of an eye from a substantial distance, thereby enabling the NUC to be started significantly in advance of the user looking into the device. By performing the NUC when the user starts using the device the maximum time is provided for usage before a further NUC is required.

Other particular methods of utilising the information from sensor 16 may be appropriate depending on the particular utilisation of the device. For example, the display may be turned on and off depending on the proximity of the detected used, or the device may switch between sensors, for example thermal and visual.

As well as ensuring NUC is not performed at an appropriate time, the device of Figure 1 provides a convenient method for a user to prompt NUC of the device at a convenient time. Conventional devices may have a button which the user must press to cause the NUC. This is inconvenient as it requires substantial movement by the user which is likely to disrupt usage of the device. In the device of Figure 1 NUC is triggered by a movement of the user's eye being detected. The user may therefore make a small movement of their head away from the eyepiece to cause the NUC to occur. This is a much smaller movement and therefore causes much less disruption to usage of the device. This may be particularly appropriate where the device is used as a gun sight as it allows NUC to be prompted without disrupting the aim of the weapon.

The sensitivity of the sensor, and therefore the distance from the eye-piece at which the presence of an eye is indicated, may be configured by the user.

Further functionality may also be provided based on the signals from sensor 16. For example, the device may be configured to switch to a standby mode when the presence of an eye is not detected to conserve battery power.

In particular embodiments the sensor may provide an indication of the distance between the eye-piece and the eye. Such systems may allow greater configuration of the circumstances in which the NUC is performed, and may also allow further functionality dependant on the distance. For example, the device may switch on at a first distance, and perform an NUC at a second distance. Furthermore, the distance can be used to control the zoom of the device. For example as the distance decreases the zoom (optical or electronic) may be increased. For example, the device may switch on at a distance of 2", and if the distance decreases below 1" the zoom may be increased.

Sensor 16 may be provided utilising any device suitable for providing an indication of proximity of a person's eye to the eye-piece. For example, a light source may be provided to emit a pulse of light. The light is reflected off the person's eye as it approaches or is in position at the eye-piece and the reflected light is detected by a detector. The presence of a reflection indicates the presence of an eye close to the eye-piece. To avoid interfering with the person's vision, the light may be of a non-visible wavelength, and to avoid interference with the detector may be of a wavelength to which the detector is not sensitive. The light may also be at a wavelength that is not detectable by other sensors, for example night vision devices. Such a sensor may provide an indication of distance by measuring the time between emission and detection of a pulse of light. In a further option a temperature sensor, for example a pyroelectric sensor, could be utilised to detect the proximity of a head to the device, hence indicating a user using the device. Ultrasonic, capacitive, or mechanical sensors could also be utilised.

The detected proximity may also indicate the direction of that proximity. For example, the sensor may differentiate between a user looking into the device from a certain distance (i.e. along the viewing direction of the display but separated from the eye-piece), and a user's head the same distance away but in a lateral direction. In the former case the user is likely to be utilising the device and no NUC should be performed. However, in the latter case although the user is in proximity, they are unlikely to be utilising the device and an NUC can be performed. Detected proximity along the viewing direction will increase very rapidly if the user moves their head laterally, thereby giving a rapid indication that a user has stopped using the device.

Where references are made to the proximity of a user's eye or head to the device, this is not intended to restrict the sensor to only detecting that part of a user's body. As will be appreciated the sensor provides an indication of usage of the device by detecting proximity to the device which provides an indication that a user is looking into the device.

The embodiments have been described specifically with reference to a device with a detector that requires periodic calibration, but certain aspects of the disclosure are also applicable to detectors that do not require such calibration and the disclosure is not limited to any particular type of detector.

The term 'processing system' is used herein to refer to any device with processing capability such that it can execute instructions. Those skilled in the art will realize that such processing capabilities are incorporated into many different devices and therefore the term includes, for example, all types of micro-processors, CPUs, GPUs, and DSPs, and multifunction chips.

The methods described herein may be performed by software in machine readable form on a tangible storage medium e.g. in the form of a program comprising program code means adapted to perform all the steps of any of the methods described herein when the program is run on a processing system and where the program may be embodied on a readable medium. Examples of tangible (or non-transitory) storage media include disks, thumb drives, memory etc and do not include propagated signals. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. Features of each embodiment may be considered in any functioning combination.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description of a preferred embodiment is given by way of example only and that various modifications may be made by those skilled in the art. The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the spirit or scope of this invention, including combining features disclosed in respect of one embodiment with features disclosed in respect of a second embodiment.

## Claims

1. A thermal imaging device, comprising
a detector for detecting thermal radiation,
a display for outputting a visible image,
a processing system coupled to the detector and to the display, the processing system configured to process the output of the detector and output signals to the display to cause the display of a visible image representative of the thermal image detected by the detector,
a sensor configured for detecting the proximity of a user's head to the device, wherein
the processing system is configured to perform a Non-Uniformity Correction dependent on the signal from the sensor.

2. A thermal imaging device according to claim 1, wherein the processing system performs a Non-Uniformity Correction only when the sensor indicates no head in proximity to the device.

3. A thermal imaging device according to claim 1, wherein the processing system performs a Non-Uniformity Correction when the sensor indicates the approach of a head to the device.

4. A thermal imaging device according to claim 1 or claim 3, wherein the processing system performs a Non-Uniformity Correction when the sensor indicates the retreat of a head from the device.

5. A thermal imaging device according to any preceding claim wherein the sensor comprises a light source configured to emit light towards the expected position of a user's head when looking at the display, and a detector configured to detect light from the light source that has been reflected by a user's head when in proximity to the device.

6. A thermal imaging device according to claim 5, wherein the emitted light is directed towards the expected position of a user's eye and the detector is configured to detect light reflected from that user's eye.

7. A thermal imaging device according to any of claims 1 to 4 wherein the sensor is a temperature sensor.

8. A thermal imaging device according to claim 7 wherein the sensor is a pyroelectric sensor.

9. A thermal imaging device according to any preceding claim, wherein the processing system is configured to deactivate the device when the sensor indicates a head is not in proximity to the device.

10. A thermal imaging device according to any preceding claim, wherein the processing system is configured to adjust a zoom of the device dependent on the proximity of head as detected by the sensor.

11. A thermal imaging device according to any preceding claim wherein the sensor provides an indication of distance between the device and the user's head.

12. A thermal imaging device according to any preceding claim, wherein the proximity is detected in a direction along the viewing direction of the display.

13. A method of calibrating a thermal imaging device, comprising the steps of
detecting proximity of a user's head to the output display of the device, and
performing a Non-Uniformity Correction dependent on that proximity.

14. A method according to claim 13, wherein the Non-Uniformity Correction is performed only when the sensor indicates no head in proximity to the device.

15. A method according to claim 13, wherein the Non-Uniformity Correction is performed when the sensor indicates the approach and/or retreat of a head to or from the device.
